Europäisches Patentamt

European Patent Office

Office européen des brevets

(11) Veröffentlichungsnummer: **0 137 396 B1**

(12) **EUROPÄISCHE PATENTSCHRIFT**

(45) Veröffentlichungstag der Patentschrift: **14.08.91**

(21) Anmeldenummer: **84111373.1**

(22) Anmeldetag: **24.09.84**

(51) Int. Cl.⁵: **H02H 9/04, H02M 3/18**

(54) Schaltungsanordnung zum Schutz einer an die Vierdrahtseite einer Übertragergabel angeschlossenen Elektronikschaltung.

(30) Priorität: **27.09.83 DE 3334952**

(43) Veröffentlichungstag der Anmeldung:
**17.04.85 Patentblatt 85/16**

(45) Bekanntmachung des Hinweises auf die
Patenterteilung:
**14.08.91 Patentblatt 91/33**

(84) Benannte Vertragsstaaten:
**AT BE CH DE FR GB IT LI NL SE**

(56) Entgegenhaltungen:
**DE-A- 2 016 982**
**DE-A- 2 501 651**

(73) Patentinhaber: **Siemens Aktiengesellschaft**
**Wittelsbacherplatz 2**
**W-8000 München 2(DE)**

(72) Erfinder: **Nagler, Werner, Dipl.-Ing.**
**Lipowskystrasse 8**
**W-8000 München 70(DE)**
Erfinder: **Ossler, Walter, Dipl.-Ing. (FH)**
**Wallbergstrasse 38**
**W-8034 Germering(DE)**
Erfinder: **Kopetzky, Horst**
**Lannerstrasse 11**
**W-8025 Unterhaching(DE)**

## Beschreibung

Die Erfindung betrifft eine Fernsprech-Teilnehmeranschlußschaltung mit einer Übertragergabel, deren Zweidrahtseite mit Überspannungsableitern verbunden ist und an deren Vierdrahtseite eine insbesondere einen Filterbaustein umfassende Elektronikschaltung angeschlossen ist.

Wenn auf die an eine solche Teilnehmeranschlußschaltung angeschlossenen Teilnehmeranschlußleitungen atmosphärische Entladungen einwirken, dann werden die dabei entstehenden Spannungsimpulse durch die genannten Überspannungsableiter zwar beschnitten, an die auf der Sekundärseite der Übertragergabel angeschlossene Elektronikschaltung, die einen relativ hohen Eingangswiderstand aufweist, können aber dennoch Spannungsimpulse mit einer Amplitude einwirken, die zu Zerstörungen der Bauelemente der Elektronikschaltung führen. Bei herkömmlichen Vermittlungssystemen war ein vergleichbares Problem nicht gegeben, da an die Gabelübertrager einer solchen Teilnehmeranschlußschaltung passive, nichtelektronische Bauelemente angeschlossen waren.

Im Zusammenhang mit einem elektronischen Koppelfeld, das über einen Übertrager zugänglich ist, ist es bekannt, zum Schutz der elektronischen Bauteile des Koppelfeldes eine Schutzschaltung vorzusehen, die aus einer Reihenschaltung zweier Paare von Zenerdioden und zweier Längswiderstände besteht; vgl. DE-A-2501651. Die Anschaltung dieser Schutzschaltung ist hierbei derart, daß der Verbindungspunkt der beiden Zenerdiodenpaare an Erdpotential liegt, und daß die äußeren Anschlüsse der Reihenschaltung der beiden Zenerdiodenpaare einerseits jeweils über einen der Längswiderstände an einen Anschluß der Wicklung des Übertragers und andererseits an einem Eingang bzw Ausgang des Koppelfeldes angeschlossen sind. Die Widerstände weisen einen derart großen Widerstandswert auf, daß sie zwar im Falle des Auftretens von Störspannungen, die die Zenerdioden bzw. Zenerdiodenpaare in den Zenerbereich gesteuert haben, einen ausreichenden Schutz für die Zenerdioden gegen Überströme gewährleisten, dafür aber im Normalfall die Nutzsignale so stark bedämpfen, daß ausgangsseitig des Koppelfeldes eine Einrichtung zum Entdämpfen vorgesehen sein muß.

Aufgabe der vorliegenden Erfindung ist es, für die eingangs genannte Fernsprech-Teilnehmeranschlußschaltung eine Schutzschaltung vorzusehen, mit der die an die Übertragungsgabel angeschlossene Elektronikschaltung wirksam gegen Überspannungen, die aufgrund von Einkopplungen atmosphärischer Entladungen auf die an die auf der Primärseite der Übertragergabel angeschlossene Teilnehmeranschlußleitung trotz einer Begrenzung durch die ebenfalls auf der Primärseite angeschlossenen Überspannungsableiter noch an ihre Eingänge gelangen können, ohne daß durch die Schutzmaßnahmen die Nutzsignale im ungestörten Fall in unzulässigem Maße bedämpft werden.

Diese Aufgabe wird durch die im kennzeichnenden Teil des Patentanspruchs 1 angegeben Merkmale gelöst.

Der erfindungsgemäß vorgesehene direkte Anschluß der Zenerdioden an die Übertragerwicklung gewährleistet nicht nur eine Begrenzung der Spannungswerte im Vierdrahtbereich, also einen Schutz der vierdrahtseitig angeschlossenen Elektronikschaltung, sondern bietet darüber hinaus den Vorteil einer dämpfenden Wirkung auf der Zweidrahtseite, so daß die trotz der Begrenzung durch die primärseitig vorgesehenen Überspannungsableiter noch vorhandenen Störspannungen soweit bedämpft werden, daß sie bei einer Überkopplung auf benachbarte Teinehemranschlußleitungen bzw. Teilnehmeranschlußschaltungen sich nicht mehr in Form von Störgeräuschen bemerkbar machen können. Darüber hinaus ist gewährleistet, daß die auf der Sekundärseite trotz Begrenzung durch die Zenerdiodenpaare unter Umständen noch verbleibenden Überspannungen die Bauelemente der Elektronikschaltung nicht gefährden können, ohne daß die der Elektronikschaltung zugeführten bzw. von ihr abgegebenen Nutzsignale so stark bedämpft werden, daß Entdämpfungsmaßnahmen wie im Falle der genannten Entgegenhaltung erforderlich sind.

Gemäß weiterer Ausgestaltung der Erfindung sind die an Bezugspotential liegenden Schaltungspunkte der vierdrahtseitigen Übertragerwicklung, der Zenerdioden und der Elektronikschaltung niederohmig und induktivitätsarm miteinander verbunden, so daß der über die Zenerdioden fließende Ableitstrom nicht zur Belastung der Stromversorgungsleitungen führt.

Nachstehend wird die Erfindung anhand eines Ausführungsbeispiels unter Bezugnahme auf eine Figur noch näher erläutert.

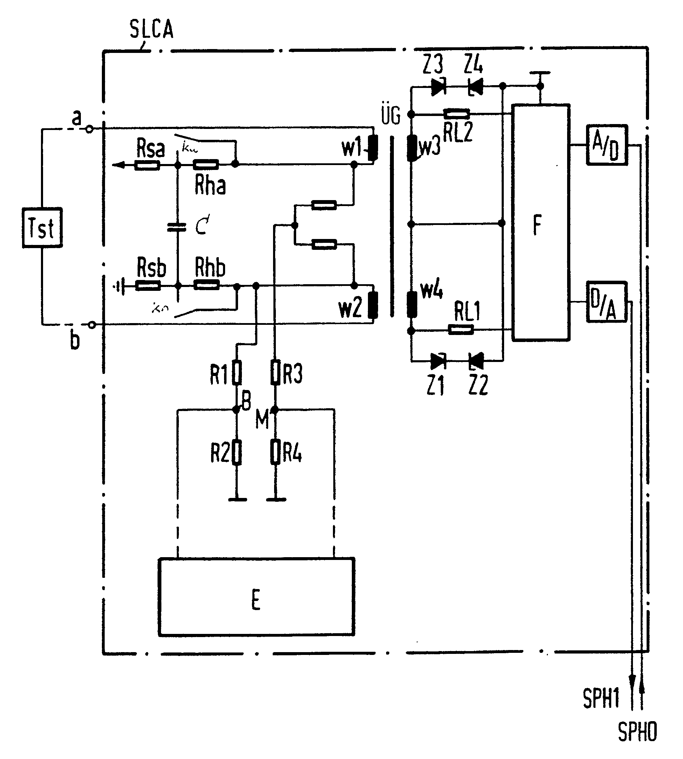

Die Figur zeigt im zum Verständnis der Erfindung erforderlichen Umfang eine Teilnehmeranschlußschaltung SLCA für den Anschluß einer Teilnehmeranschlußleitung mit den Leitungsadern a und b, an denen eine Teilnehmerstation Tst liegt, an eine digitale Zeitmultiplex-Fernsprechvermittlungsstelle.

Bestandteil dieser Teilnehmeranschlußschaltung ist eine Speiseschaltung mit den Widerständen Rsa, Rsb, Rha, Rhb, wobei die letztgenannten Widerstände durch relaisbetätigte Kontakte ka und kb überbrückbar sind,und mit einem Kondensator C, der an den Verbindungspunkten der Widerstände Rsa und Rha bzw. Rsb und Rhb angeschlossen ist.

Ein aus den Widerständen R1 und R2 bestehender Spannungsteiler, der mit der Ader b der Teilnehmeranschlußleitung in Verbindung steht und ein aus den Widerständen R3 und R4 bestehender Spannungsteiler, der an einem Querzweig zwischen den Adern a und b der Teilnehmeranschlußleitung liegt, stellen mit ihren Teilerpunkten B und M Indikationsstellen für eine nicht dargestellte Erkennungsschaltung für den Schleifenzustand dar, die jeweils für acht solcher Teilnehmeranschlußschaltungen gemeinsam vorgesehen ist, weswegen eine Verbindung zu diesen Indikationspunkten B und M über einen ebenfalls nicht dargestellten Analogmultiplexer herstellbar ist.

Die Teilnehmeranschlußschaltung enthält ferner eine Übertragergabelschaltung ÜG, deren Wicklungen w1 und w2 einerseits mit den Adern a und b der Teilnehmeranschlußleitung, andererseits mit der genannten Speiseschaltung verbunden sind und deren Wicklungen w3 und w4 einerseits am Bezugspotential liegen, andererseits einen Vierdrahteingang bzw. einen Vierdrahtausgang bilden, an den als die eigentliche gegen Überspannungen zu schützende Schaltung ein Empfangs-/Sendefilter F angeschlossen ist.

Der Filterbaustein F steht mit einem Codec, bestehend aus einem Analog-Digital-Wandler A/D und einem Digital-Analog-Wandler D/A in Verbindung, die ihrerseits an eine Zeitmultiplexleitung für ankommende Übertragungsrichtung SPHI bzw. an eine Zeitmultiplexleitung für abgehende Übertragungsrichtung SPHO angeschlossen sind, über die sie mit einer hier nicht dargestellten Koppeleinrichtung in Verbindung stehen.

Die nicht am Bezugspotential für den Filterbaustein liegenden Anschlüsse der Wicklungen w3 und w4 der Übertragergabel ÜG sind über Paare gegensinnig geschalteter Zenerdioden Z1 und Z2 bzw. Z3 und Z4 mit einem solchen Bezugspotential führenden Schaltungspunkt verbunden. Ihre Zenerspannung ist größer als die höchsten zu erwartenden über die Übertragergabel laufende Nutzspannungsamplituden,soll jedoch die Versorgungsspannung des Filterbausteins von beispielsweise +5V und -5V möglichst wenig übersteigen. Wenn diese Zenerspannung übersteigende Überspannungen auf der Vierdrahtseite der Übertragergabel auftreten, wird je nach Polarität solcher Überspannungen jeweils eine der Zenerdioden dieser Paare leitend, so daß die Überspannungen niederohmig nach Bezugspotential abgeleitet werden.

Wie schon angedeutet, sind ferner Längswiderstände RL1 und RL2 vorgesehen, über die die Verbindung der nicht an Bezugspotential liegenden Anschlüsse der Wicklungen w3, w4 mit dem Eingang bzw. im Ausgang des Filterbausteins F hergestellt ist. Sie sind so dimenioniert, daß auch dann, wenn aus den genannten Gründen auf der Vierdrahtseite der Übertragergabel noch Spannungen auftreten, die über den Versorgungsspannungen des Filterbausteins liegen, die in diesem Fall fließenden Ströme auf einen Wert begrenzt werden,bei dem keine Zerstörungen der Bauelemente des Filterbausteins zu befürchten sind.

## Patentansprüche

1. Fernsprech-Teilnehmeranschlußschaltung mit einer Übertragergabel, deren Zweidrahtseite mit Überspannungsableitern verbunden ist und an deren Vierdrahtseite eine insbesondere einen Filterbaustein umfassende Elektronikschaltung angeschlossen ist,
**dadurch gekennzeichnet,**
daß zum Schutz der Elektronikschaltung (F) gegen auf die an die Zweidrahtseite der Übertragergabel (ÜG) angeschlossene Teilnehmeranschlußleitung eingekoppelte Störspannungen ein Paar gegensinnig in Reihe geschalteter Zenerdioden (Z1, Z2; Z3, Z4) direkt an nicht an Bezugspotential liegende Vierdrahtanschlüsse der Übertragerwicklung (w3, w4) angeschlossen ist, wogegen die übrigen Vierdrahtanschlüsse der Übertragerwicklung (w3, w4) an auch für die Elektronikschaltung maßgeblichem Bezugspotential liegen, daß die Zenerspannung der Zenerdioden über der höchstens zu erwartenden Nutzspannungsamplitude liegt, jedoch die Versorgungssspannung der Elektronikschaltung möglichst wenig übersteigt, und daß die Vierdrahteingangs- und Ausgangsanschlüsse der Elektronikschaltung mit den nicht an Bezugspotential liegenden Vierdrahtanschlüssen der Übertragerwicklung über jeweils einen Widerstand (RL1, RL2) in Verbindung stehen, der so bemessen ist, daß durch trotz der Wirkung der Zenerdioden gegebenenfalls verbleibende Überspannungen hervorgerufene Ströme einen unzulässig hohen Wert nicht übersteigen.

2. Schaltungsanordnung nach Anspruch 1,
**dadurch gekennzeichnet, daß**
an Bezugspotential liegende Schaltungspunkte der vierdrahtseitigen Übertragerwicklung (w3, w4), der Zenerdioden (Z1, Z2; Z3, Z4) und der Elektronikschaltung (F) niederohmig und induktivitätsarm miteinander verbunden sind.

## Claims

1. Telephone subscriber line circuit comprising a transformer-type hybrid, the two-wire side of which is connected to overvoltage arresters and to the four-wire side of which is connected an electronic circuit comprising especially a filter module, characterised in that, to protect the electronic circuit (F) against interference voltages coupled into the subscriber line connected to the two-wire side of the transformer-type hybrid (ÜG), a pair of Zener diodes (Z1, Z2; Z3, Z4), connected with opposite polarity in series, is directly connected to four-wire connections, which are not connected to reference potential, of the transformer winding (w3, w4), whereas the remaining four-wire connections of the transformer winding (w3, w4) are connected to reference potential which is also determining for the electronic circuit, in that the Zener voltage of the Zener diodes is above the maximum useful voltage amplitude to be expected but exceeds the supply voltage of the electronic circuit as little as possible, and in that the four-wire input and output connections of the electronic circuit are connected to the four-wire connections, which are not connected to reference potential, of the transformer winding via in each case one resistor (RL1, RL2) which is dimensioned in such a manner that currents caused by overvoltages which are possibly remaining in spite of the effect of the Zener diodes, do not exceed an inadmissibly high value.

2. Circuit arrangement according to Claim 1, characterised in that circuit points, connected to reference potential, of the four-wire-side transformer winding (w3, w4) of the Zener diodes (Z1, Z2; Z3, Z4) and of the electronic circuit (F) are connected to one another with low impedance and low inductance.

**Revendications**

1. Circuit de raccordement d'abonné téléphonique comportant un translateur, dont le côté bifilaire est raccordé à des dispositifs de dérivation des surtensions et dont le côté quadrifilaire duquel est raccordé à un circuit électronique comprenant notamment un module formant filtre, caractérisé par le fait que pour la protection du circuit électronique (F) vis-à-vis de tensions parasites injectées par couplage dans la ligne d'abonné raccordée au côté bifilaire du translateur (ÜG), un couple de diodes Zener (Z1, Z2; Z3,Z4) branchées en série en sens opposé est raccordé directement aux bornes quadrifilaires, non placées à un potentiel de référence, de l'enroulement (w3,w4) du translateur, tandis que les autres bornes quadrifilaires de l'enroulement (w3,w4) du translateur sont raccordées à un potentiel de référence, qui est également déterminant pour le circuit électronique, que la tension de Zener des diodes Zener est supérieure à l'amplitude maximale de la tension utile, à laquelle on peut s'attendre, tout en dépassant aussi peu que possible la tension d'alimentation du circuit électronique, et que les bornes d'entrée et de sortie quadrifilaires du circuit électronique sont raccordées aux bornes quadrifilaires, non raccordées au potentiel de référence, de l'enroulement du translateur respectivement par l'intermédiaire d'une résistance (RL1,RL2), qui est dimensionnée de manière que des courants provoqués par des surtensions qui subsistent éventuellement en dépit de l'action des diodes Zener, ne dépassent pas une valeur inadmissible.

2. Montage selon la revendication 1, caractérisé par le fait que les points de circuit côté quadrifilaire de l'enroulement (w3, w4) du translateur, des diodes Zener (Z1, Z2, Z3, Z4) et du circuit électronique (F), qui sont portés au potentiel de référence, sont reliés entre eux suivant une liaison faiblement ohmique et à faible inductance.